# EUROPEAN PATENT APPLICATION

(11) **EP 2 991 032 A1**
(43) Date of publication of application: **02.03.2016**
(21) Application number: 15180406.9
(22) Date of filing: 10.08.2015
(51) Int. Cl.: G06T 1/20, G06T 7/00

(54) **METHOD AND APPARATUS FOR ACCELERATED PIXEL-RECURSIVE PROCESSING OF AN IMAGE SIGNAL**

(30) Priority: 27.08.2014 EP 14306321
(71) Applicant: Thomson Licensing, 92130 Issy-les-Moulineaux (FR)
(72) Inventor: Gandolph, Dirk, 30952 Ronnenberg (DE)
(74) Representative: Hartnack, Wolfgang

(57) **Abstract**

For accelerated pixel-recursive processing of an image signal, an image is divided (91) into multiple segments, wherein each segment has a non-overlapping kernel area and a surrounding overlapping band, and the pixel values in the overlapping band are copies of corresponding pixel values from two or more adjacent kernel areas. In parallel a pixel-recursive processing (921,922,...,92n) is carried out within each one of the segments, independently from the processing in the other segments. Pixel-recursively processed pixel values are selected (931,932,...,93n) from the kernel areas of the segments, but not from the surrounding overlapping bands, and are merged (94) so as to reconstruct a pixel-recursively processed version of the image signal. This kind of pixel-recursive processing can be applied in an HRM processing used for generating disparity maps in a stereo and multi-view camera system.

## Description

### Technical field

The invention relates to a method and to an apparatus for accelerated pixel-recursive processing of an image signal.

### Background

Using recursive processing in image processing closely interrelates to the processing time needed for its execution. Often recursive processing is more reliable than other direct methods because it comes close to the optimal solution even when starting in bad conditions. But a disadvantage of recursive approaches is the need of a finally calculated data set for every next iteration step. The iteration finalisation causes the accumulation of processing times, which becomes the dominant fraction of the overall processing time.

Recursive processing in image processing can be frame recursive or pixel recursive. The frame recursive processing is less costly because the calculations required to pass a single iteration step can be carried out in parallel on all image pixels. The pixel operations are independent from their neighbours during the iteration step. By using a graphics processing unit GPU, the resulting delays are moderate and the overall processing performance is dominated by the count of iterations.

In pixel recursive processing the pixel calculations cannot be executed independently from neighbour pixel values. The image is scanned pixel-wise and iterations are carried out by moving forward through the image and by directly incorporating previously generated modifications.

A typical representative of pixel recursive processing using a hybrid recursive matching algorithm (HRM) is described in N. Atzpadin, P. Kauff, O. Schreer, "Stereo Analysis by Hybrid Recursive Matching for Real-Time Immersive Video Conferencing", IEEE Transactions on Circuits Systems and Video Technique, vol.14(3), pp.321-334, 2004. This system was developed for robust depth estimations and for wide baselines stereo camera systems. In this system the burden of a longer processing time is taken into account for the sake of homogeneous and more reliable depth maps.

### Summary of invention

In HRM, every new pixel position represents an iteration step, causing that parallel processing of image data on a GPU is impeded. Therefore the resulting pixel recursive processing performance is dominated by the pixel count in the images.

A problem to be solved by the invention is to improve such pixel recursive processing performance. This problem is solved by the method disclosed in claim 1. An apparatus that utilises this method is disclosed in claim 2.

Advantageous additional embodiments of the invention are disclosed in the respective dependent claims.

In comparison to the above-mentioned Atzpadin et al. article, the reachable gain can be demonstrated and potential side effects are considered.

According to the invention, the image pixel count-dominant influence in pixel position-recursive processing is reduced by facilitating a parallel processing, and thus accelerates the overall image processing time. Such acceleration is achieved, in a first step, by splitting the single scans into multiple independent scanning paths covering mutually overlapping areas. In a second step, the outcome of the separate multiple scans is merged while keeping the integrity of the estimation result and avoiding inconsistent junctions. The application of multiple scanning paths allows parallel processing and shorter execution times.

A positive side effect is scene object adapted filtering. Additional improvements in the filtering results can be achieved if scene object-aware paths are used for the processing.

In principle, the inventive method is suited for accelerated pixel-recursive processing of an image signal, including:
- dividing an image into multiple segments, wherein each segment has a non-overlapping kernel area and a surrounding overlapping band, the pixel values in said overlapping band being copies of corresponding pixel values from two or more adjacent kernel areas;
- carrying out in parallel a pixel-recursive processing within each one of said segments, independently from the processing in the other segments;
- selecting pixel-recursively processed pixel values from the kernel areas of said segments, but not from the surrounding overlapping bands;
- merging these selected pixel-recursively processed pixel values so as to reconstruct a pixel-recursively processed version of said image signal.

In principle the inventive apparatus is suited for accelerated pixel-recursive processing of an image signal, said apparatus including:
- means which divide an image into multiple segments,
wherein each segment has a non-overlapping kernel area and a surrounding overlapping band, the pixel values in said overlapping band being copies of corresponding pixel values from two or more adjacent kernel areas;
- means which carrying out in parallel a pixel-recursive processing within each one of said segments, independently from the processing in the other segments;
- means which select pixel-recursively processed pixel values from the kernel areas of said segments, but not from the surrounding overlapping bands;
- means which merge these selected pixel-recursively processed pixel values so as to reconstruct a pixel-recursively processed version of said image signal.

### Brief description of drawings

Exemplary embodiments of the invention are described with reference to the accompanying drawings, which show in:
- Fig. 1: line-by-line scan;
- Fig. 2: three pixel iteration steps during the scan;
- Fig. 3: segment generation;
- Fig. 4: individual scan segment;
- Fig. 5: multiple paths processing;
- Fig. 6: kernel merging;
- Fig. 7: overlap band merging;
- Fig. 8: simplified presentation of the overall processing in the Atzpadin et al. article;
- Fig. 9: block diagram of the processing according to the invention.

### Description of embodiments

Even if not explicitly described, the following embodiments may be employed in any combination or sub-combination.

A picture is subdivided into an array of 2D segments, such that a small frame-like area near the segment boundaries is duplicated in order to provide a neighbourhood for each segment. The pixel-recursive processing is carried out in all segments independently and in parallel. A disadvantage is that the spatial result effect typical for pixel-recursive algorithms is interrupted at the segment boundaries. The invention comprises features which mitigate this.

In the total segment area including the overlap frames or bands the HRM processing is carried out, but from the result only the segment area inside the frames/bands is used, i.e. the result for the central segment area. The width of these overlap bands is selected such that on one hand in the final result brake-off effects near the block boundaries are minimised and on the other hand there is still an overall processing acceleration.

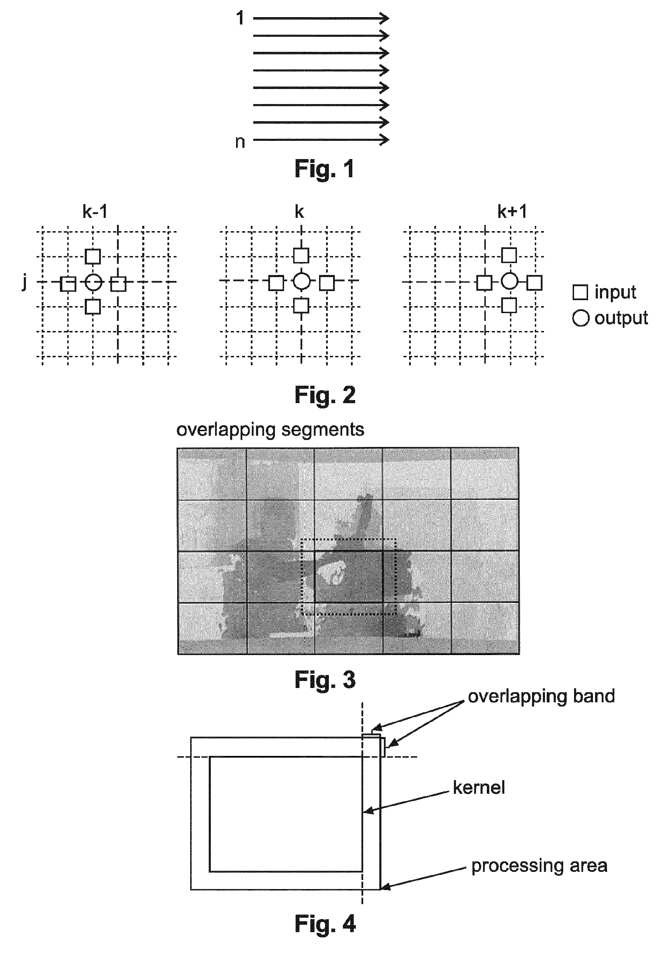

Pixel recursive image processing works pixel-wise across the image by directly incorporating any value changes generated during the path through an image. Fig. 1 shows a corresponding line-by-line scan.

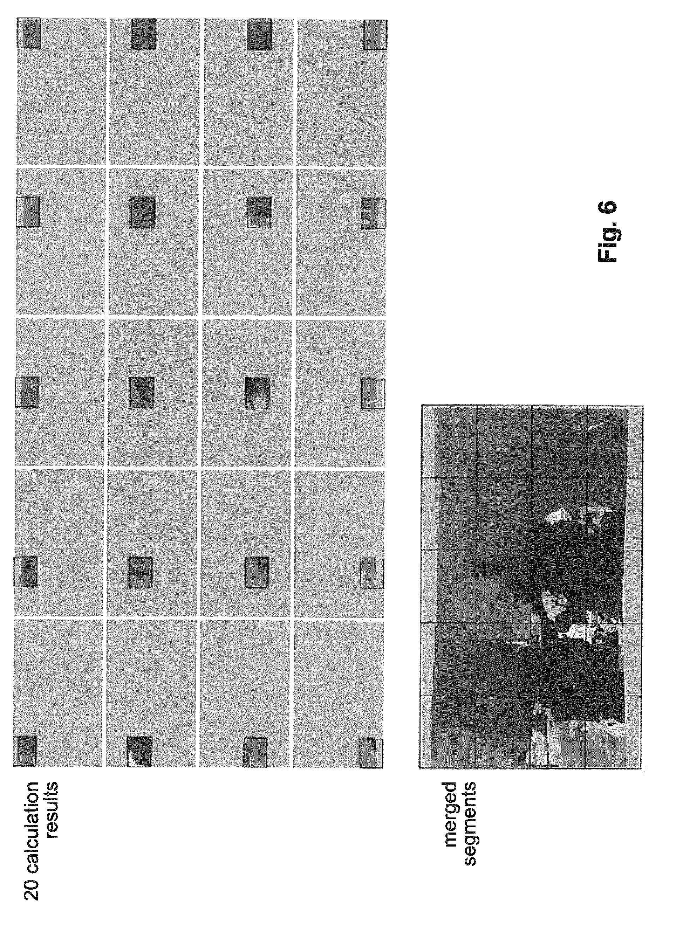

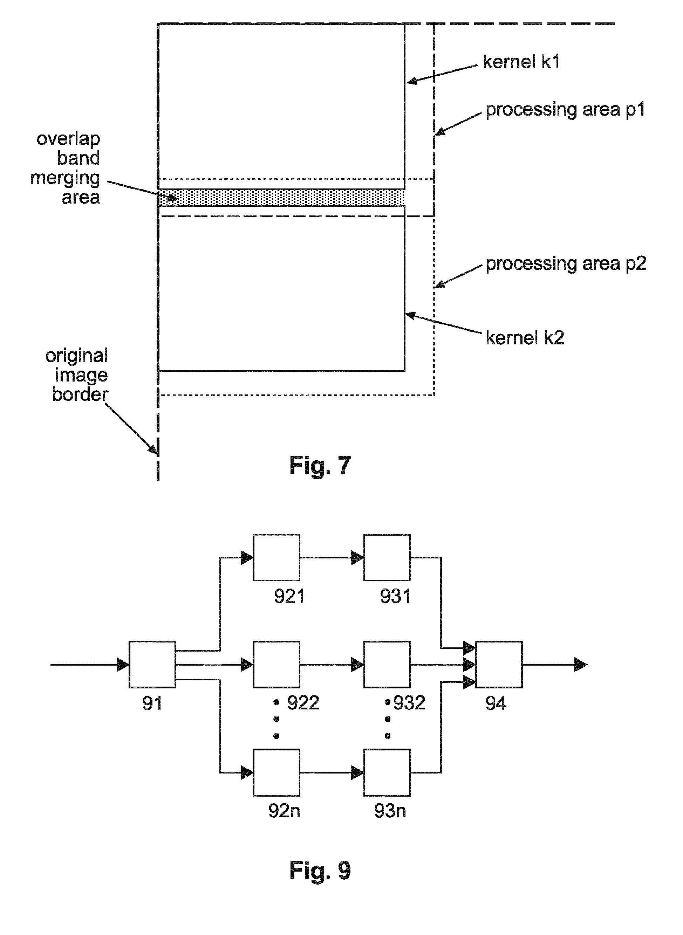

The HRM processing in the above-mentioned Atzpadin et al. article uses one vector per block in 8x8 or 4x4 distances. Therefore the visible blocks in Atzpadin figures 6 and 7 represent both: pixels (single values, respectively) in the Sparse Disparity Field und blocks in the original image. The pixel recursive part does not serve for generating a dense disparity field. Instead, by the pixel recursion from the quotient of interframe difference and local gradient an update vector is calculated and is processed recursively over two lines (oddly from left to right and evenly from right to left). Each one of the parallel pixel recursions provides an output vector and, using DFD criteria, the three best ones of them are used as output vector candidates for the following block in the block recursion processing. The dense disparity fields are thereafter generated separately using bilinear interpolation, see section VI of the Atzpadin et al. article.

The block recursive and pixel recursive steps are successively repeated for all picture blocks.

Fig. 2 depicts three pixel iteration steps during the inventive scan processing. Squares represent input pixel values and circles represent output pixel values. When observing position {j,k} in the left part of Fig. 2 it can be seen that the value of image pixel {j,k} is used as input data in the first iteration, then it is modified by the values of its neighbour pixels in the second iteration depicted in the middle part of Fig. 2, and in the last iteration depicted in the right part of Fig. 2 the modified value of pixel {j,k} becomes again the input value for the following neighbour pixel {j,k+1}. This schematic demonstrates that pixel recursive image processing cannot be parallelised because any modification is directly contributing to the next pixel iteration.

The invention allows reducing the processing time required for pixel recursive image processing without losing their advantages. As mentioned above the image is divided into independent segments and the pixel recursive calculation are executed separately for each segment. The individual results are merged again providing the complete result, whereby negative edge effects are avoided when merging the separately generated results.

The segments can be equally sized, or their size can be adapted or aligned to the shape or boundaries of objects in the picture content, or the segments are selected such that it is avoided that scene object borders are located close to the segment edges.

Scene object-aware segmentation can be advantageous e.g. for disparity estimation because occlusion appearing at object borders causes uncertainty in the estimation results.

Fig. 3 depicts equally sized segment generation by dividing the image into 20 segments as an example. The individual segments generated are characterised by an overlapping band and a kernel area as shown in Fig. 4. The pixels located within the overlapping band are copied from corresponding adjacent segments and thus are part of different segments. The kernel in every segment is surrounded by the overlapping band, which for image border segments is only two-sided or three-sided. The kernel pixels in a segment are unique for each segment and thus are exclusively processed in each segment.

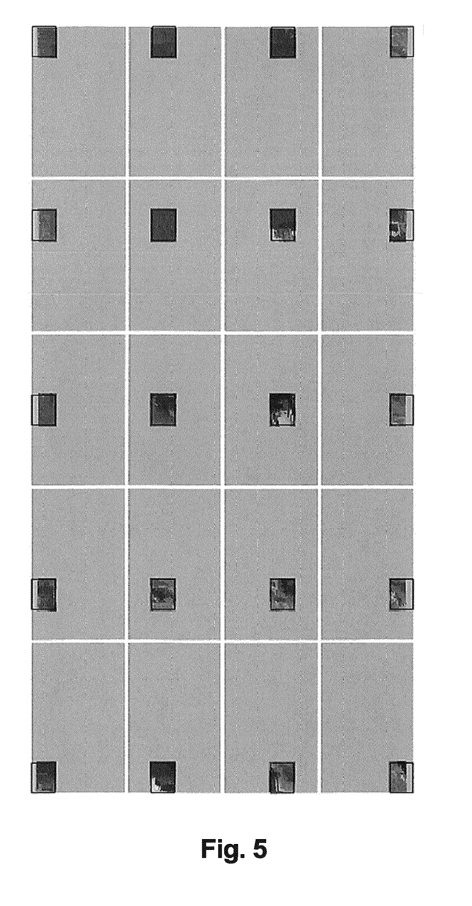

The pixel recursive processing is applied separately and in parallel on each segment. This is in particular advantageous for the processing of large images sized 2k or 4k. As depicted in Fig. 5, every segment has its individual pixel recursive path. This can be a line-by-line path or a meander scan or a scene object adaptive path as described in Atzpadin et al. For convenience the segment locations within the original picture are kept in Fig. 5.

The kernel parts of the results generated separately for each segment of Fig. 5 and depicted in the upper part of Fig. 6 are merged again as depicted in the bottom part of Fig. 6. That merging step can be executed in different ways. In a first embodiment the segment kernel result pixels are cut out and their pixel values are paste into the final output image, as depicted in the bottom part of Fig. 6. This embodiment can be used if kernels are sized for the coverage of the complete original image area.

In a second embodiment the segment kernels are configured smaller, such that they do not cover the complete original image area. An example with kernels not covering the complete original image area is depicted in Fig. 7. A corresponding dark area between kernel k1 and kernel k2 is depicted in Fig. 7 as 'overlap band merging area'. The missing result pixel values are generated in the individual overlap bands for example by linear interpolation from pixel values from the overlap area between kernel k1 and kernel k2, in order to provide the remaining image pixel values for a complete image result. The overlap band merging within corners of the individual segments can be performed by carrying out a median filtering from pixel values in the related overlap areas, or by averaging the individual result pixel values stemming from the corresponding four overlap areas.

For further improvement of the missing pixel values generation, a scene object aware segmentation and filtering can be used. I.e., pixel-recursively processed pixel values arranged at or near the borders of the kernel areas are not used for the merging, such that the kernel areas used have a reduced size. The missing pixel values in the gaps in between the reduced-size kernel areas are interpolated or filtered from pixel values of the reduced-size kernel areas.

In Fig. 9 a segmentation step or stage 91 receives an original image signal and outputs a desired number of partly overlapping image segments as shown in Fig. 5 for example. For the pixel values in each one of these segments a pixel-recursive processing as described above is carried out in parallel in steps or stages 921, 922, ..., 92n. From the corresponding output signals, kernel sections are taken in corresponding kernel cut steps or stages 931, 932, ..., 93n in parallel. These kernel sections of pixel-recursively processed pixel values (depicted in Fig. 6) are merged in a merger step or stage 94 so as to form the pixel-recursively processed output image signal.

In the second embodiment an additional filtering or interpolation at the kernel borders as described in connection with Fig. 7 is carried out in step/stage 94.

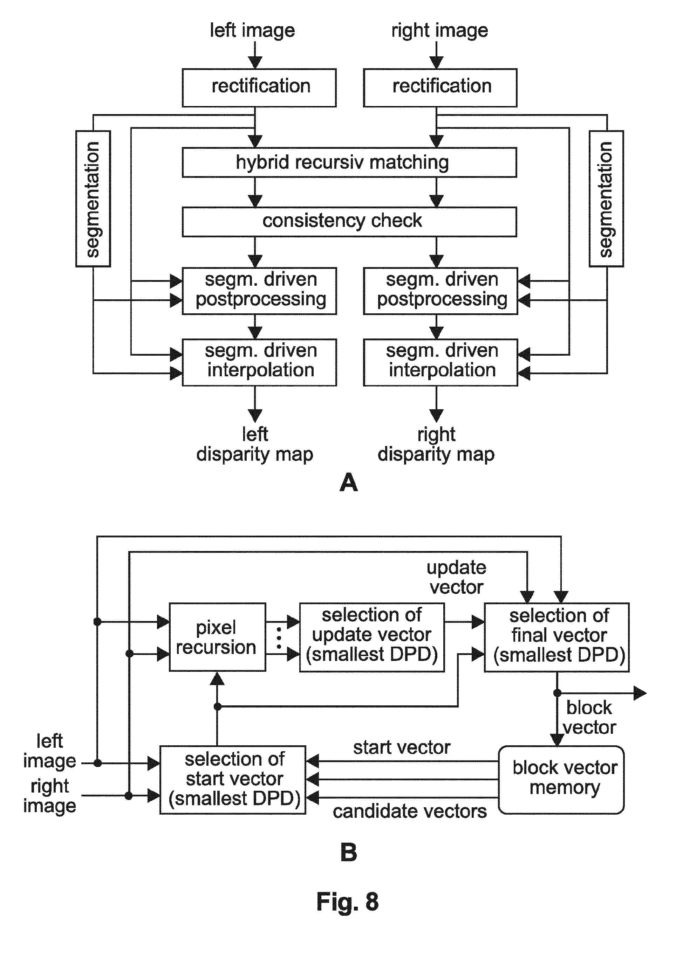

The invention can be used for accelerating the hybrid recursive matching algorithm HRM processing (in block 'pixel recursion' in Fig. 8B) described in the above-mentioned N. Atzpadin et al. system, in which disparity maps in stereo and multi-view camera systems are generated. This overall Atzpadin et al. processing is described in simplified form in Fig.8A and Fig. 8B.

Fig. 8A is taken from this article and shows a disparity estimation processing for left and right images from a stereo camera. The rectification virtually rotates the cameras to generate images with horizontal epipolar lines. The following hybrid recursive matching HRM stage is used for stereo matching. To produce accurate disparities in every area of the image, the sparse disparity maps of the hybrid recursive matching are postprocessed to create a dense map of highly reliable disparities. A consistency check detects mismatches, and then mismatches are substituted by disparities calculated from the surrounding. Around a detected depth discontinuity, missing disparities are extrapolated toward the boundaries of segmentation masks determined in parallel. If no segmentation information is available, the colour information of the original images is used to guide the interpolation or extrapolation of disparities. Outputs are left and right disparity maps.

Fig. 8B is taken from this article and shows the HRM processing in more detail. HRM combines the advantages of block recursive disparity matching and pixel recursive optical flow estimation. The block recursive part (comprising all blocks/stages except the pixel recursion block and the stage of update vector selection) assumes that depth does not change significantly from one image to the next and that depth is nearly the same in the local neighbourhood. But this assumption is not true in image areas containing high motion and at depth discontinuities. To update the results of the block recursive stage in these areas, the pixel recursive stage (comprising the pixel recursion block and the stage of update vector selection) calculates the optical flow by analysing gradients and luminance value differences. The processing includes three consecutive processing steps:
a) Candidate disparity vectors taken from a block vector memory are evaluated for the current block position using recursive block matching, whereby in that block matching the sum of absolute difference values SAD is calculated.
b) The candidate vector with the best result (i.e. the smallest displaced block difference DBD represented by the smallest SAD value) is chosen as the start disparity vector for the pixel recursive processing, which yields an update disparity vector: the vector having the smallest displaced pixel difference DPD. This update vector is calculated on the basis of spatial gradients and gradients between the stereo images, wherein the gradient between the frames is approximated by the DPD given by corresponding points in the left and right images, as shown in equations (3) to (5) in the N. Atzpadin et al. article. Thereafter multiple pixel recursive processes are started at every first pixel position of the odd lines in a block around the considered pixel. The result is one incremental update vector per pixel, which is added to the initial vector to obtain the local update vector. The local update vector of the previous pixel is then taken as the initial vector for the next pixel. The very first position of every pixel recursive processing path is initialised with the start vector from the block recursive stage. After processing all paths of multiple pixel recursions, the vector with the smallest DPD among all pixel recursive processes is taken as the final update vector. Its DBD is calculated and compared to the DBD of the start vector from the block recursion.
c) The final disparity vector per pixel is obtained by testing if the update vector from the pixel recursive stage is smaller than the start vector from the block recursive stage. If true, the update vector is chosen as the final output vector, otherwise the start vector is retained. The final disparity vector chosen is stored in the block vector memory.

The invention can be applied for different kinds of image processing, e.g. depth or disparity estimation, 2D-IIR filtering or stereoscopic 3D processing.

The inventive processing can be carried out by a single processor or electronic circuit, or by several processors or electronic circuits operating in parallel and/or operating on different parts of the inventive processing.

## Claims

1. Method for accelerated pixel processing of an image signal, including:
- dividing (91) an image into multiple segments, wherein each segment has a non-overlapping kernel area and a surrounding overlapping band, the pixel values in said overlapping band being copies of corresponding pixel values from two or more adjacent kernel areas;
- carrying out in parallel a pixel processing (921, 922, ...,92n) within each one of said segments, independently from the processing in the other segments;
- selecting (931,932,...,93n) pixel processed pixel values from the kernel areas of said segments, but not from the surrounding overlapping bands;
- merging (94) these selected pixel processed pixel values so as to reconstruct a pixel processed version of said image signal,
**characterised in that** said pixel processing is a pixel-recursive processing and said pixel processed pixel values are pixel-recursively processed pixel values.

2. Apparatus for accelerated pixel-recursive processing of an image signal, said apparatus including:
- means (91) which divide an image into multiple segments, wherein each segment has a non-overlapping kernel area and a surrounding overlapping band, the pixel values in said overlapping band being copies of corresponding pixel values from two or more adjacent kernel areas;
- means (921,922,...,92n) which carry out in parallel a pixel processing within each one of said segments, independently from the processing in the other segments;
- means (931,932,...,93n) which select pixel processed pixel values from the kernel areas of said segments, but not from the surrounding overlapping bands;
- means (94) which merge these selected pixel processed pixel values so as to reconstruct a pixel processed version of said image signal,
**characterised in that** said pixel processing is a pixel-recursive processing and said pixel processed pixel values are pixel-recursively processed pixel values.

3. Method according to claim 1, wherein pixel-recursively processed pixel values arranged at or near the borders of said kernel areas are not used for said merging such that the kernel areas used have a reduced size, and missing pixel values in the gaps in between the reduced-size kernel areas are interpolated or filtered from pixel values of the overlap areas between the reduced-size kernel areas,
or apparatus according to claim 2, wherein said merging means (94) do not use pixel-recursively processed pixel values arranged at or near the borders of said kernel areas for said merging such that the kernel areas used have a reduced size, and wherein said merging means (94) interpolate or filter missing pixel values in the gaps in between the reduced-size kernel areas from pixel values of the overlap areas between the reduced-size kernel areas.

4. Method according to the method of claim 3, wherein said filtering is a linear interpolation,
or apparatus according to the apparatus of claim 3, wherein said merging means (94) linearly interpolate missing pixel values in the gaps in between the reduced-size kernel areas from pixel values of the overlap areas between the reduced-size kernel areas.

5. Method according to the method of claim 3 or 4, wherein missing pixel values located in the corners of said gaps in between said reduced-size kernel areas are filtered by using a median filtering of corresponding pixel-recursively processed pixel values of the corresponding overlap areas between the reduced-size kernel areas,
or apparatus according to the apparatus of claim 3 or 4, wherein said merging means (94) filter missing pixel values located in the corners of said gaps in between said reduced-size kernel areas by using a median filter for corresponding pixel-recursively processed pixel values of the corresponding overlap areas between the reduced-size kernel areas.

6. Method according to the method of claim 4, wherein missing pixel values located in the corners of said gaps in between said reduced-size kernel areas are generated by averaging the individually interpolated pixel values stemming from the four adjacent reduced-size kernel areas,
or apparatus according to the apparatus of claim 4, wherein said merging means (94) generate missing pixel values located in the corners of said gaps in between said reduced-size kernel areas by averaging the individually interpolated pixel values stemming from the four adjacent reduced-size kernel areas.

7. Use of the method according to the method one of claims 1 and 3 to 6 in an HRM processing applied in generating disparity maps in a stereo and multi-view camera system.
